# EUROPÄISCHE PATENTANMELDUNG

(11) **EP 0 535 437 A1**
(43) Veröffentlichungstag der Anmeldung: **07.04.1993**
(21) Anmeldenummer: 92115727.7
(22) Anmeldetag: 15.09.1992
(51) Int. Cl.: D06M 15/643, C08L 83/08

(54) **Wässrige Dispersionen von stickstoffhaltigen Polysiloxanen**

(30) Priorität: 01.10.1991 DE 4132647
(71) Anmelder: Pfersee Chemie GmbH, D-86460 Langweid a. Lech (DE)
(72) Erfinder: Chrobaczek, Harald, Dr., W-8900 Augsburg (DE); Tschida, Günther, W-8930 Schwabmünchen (DE)

(57) **Zusammenfassung**

Wäßrige Dispersionen, welche dispergierte Polyethylenwachse und bestimmte aminofunktionelle Polysiloxane enthalten, zeigen ausgeprägt niedrige Tendenz zur Verpastung im Gegensatz zu bekannten Aminosiloxan-/Polyethylen-Dispersionen. Dieser Vorteil wird erzielt, wenn die Polysiloxane Reste enthalten, die Piperazinringe oder an Aminstickstoff gebundene Cyclohexylreste aufweisen.

Die Dispersionen eignen sich für die Behandlung von Textilien, denen sie angenehm weichen Griff bei gering ausgeprägter Vergilbungstendenz verleihen.

## Beschreibung

Die Erfindung betrifft wäßrige Dispersionen, welche bestimmte Organopolysiloxane, in denen stickstoffhaltige Reste an Silicium gebunden sind, und dispergierte Polyethylenwachse enthalten. Sie betrifft ferner die Verwendung solcher Dispersionen zur Behandlung von Fasermaterialien.

Es ist bekannt, Fasermaterialien, insbesondere textile Flächengebilde, mit wäßrigen Dispersionen zu behandeln, welche Organopolysiloxane enthalten. Bei Auswahl geeigneter Produkte können Fasermaterialien hierdurch beispielsweise weicher Griff und wasserabweisende Eigenschaften vermittelt werden. Es wurden so auch bereits Dispersionen von Organopolysiloxanen für die Textilbehandlung verwendet, welche stickstoffhaltige Substituenten aufweisen, z.B. aminofunktionelle Polysiloxane zwecks Erzielung eines weichen Griffs. Dies ist beispielsweise beschrieben in US 4 620 878 (= EP 0 138 192) und WO 88/08436. Die in diesen Schriften beschriebenen Formulierungen weisen Nachteile auf: Bei Verwendung von dort genannten Polysiloxanen, welche Substituenten mit Aminogruppen enthalten, kann eine erhöhte Vergilbungsneigung des behandelten Textilmaterials auftreten. Mittels Polysiloxanen, welche Substituenten mit Amidogruppen enthalten, lassen sich bezüglich Vergilbungstendenz Verbesserungen erzielen. Solche Dispersionen sind in EP-A 0 342 830 und EP-A 0 342 834 beschrieben. Andererseits ist jedoch mit rein amidofunktionellen Polysiloxanen, welche nur einen geringen oder keinen Gehalt an Aminogruppen aufweisen, ein voll befriedigender Griff der ausgerüsteten Textilmaterialien nicht zu erzielen. Eine ebenfalls aus dem Stand der Technik bekannte Kombination von Amino- und Amidofunktionen in den eingesetzten Polysiloxanen stellt bezüglich der erwähnten Nachteile bereits eine gewisse Verbesserung dar, wenn auch eine optimale Kombination von Griff und Vergilbungstendenz damit noch nicht erreicht wird. Außerdem sind Glanz und Reißfestigkeit von entsprechend ausgerüsteten Textilien noch nicht in allen Fällen optimal.

Eine Verbesserung des Ganzes und der Reißfestigkeit von ausgerüsteten Testilien läßt sich in vielen Fällen dadurch erzielen, daß man Dispersionen verwendet, welche außer Organopolysiloxanen mit stickstoffhaltigen Substituenten noch dispergiertes Polyethylenwachs enthalten. Solche Dispersionen sind beschrieben in der EP-A2 0 412 324. Die dort angegebenen Formulierungen enthalten Polysiloxane mit Amidogruppen.

Vom Griffausfall der ausgerüsteten Textilien her gesehen, wäre es wünschenswert, die günstigen Eigenschaften von rein aminofunktionellen, d.h. keine Amidogruppen enthaltenden Polysiloxanen mit denen von dispergierten Polyethylenwachsen zu kombinieren. Versuche, wäßrige Dispersionen herzustellen, die solche ausschließlich aminofunktionellen Polysiloxane und dispergierte Polyethylenwachse enthalten, scheiterten jedoch daran, daß solche Dispersionen zur Verpastung neigen. Bei Verwendung aminofunktioneller Polysiloxane, wie sie in der US 4 620 878 und der WO 88/08436 beschrieben sind, ließen sich keine stabilen, niedrigviskosen wäßrigen Dispersionen erhalten, die zusätzlich zu den aminofunktionellen Polysiloxanen noch dispergiertes Polyethylenwachs enthielten. Aus diesem Grund ging man bisher davon aus, daß stabile niedrigviskose wäßrige Dispersionen, die Polyethylenwachs und stickstoffhaltige Organopolysiloxane enthalten, nur erhalten werden können, wenn im Siloxan Amidogruppen anwesend sind. Auch die Vergilbungstendenz von Textilien, welche mit Polysiloxanen behandelt worden waren, die ausschließlich Amino-, jedoch keine Amidogruppen enthielten, stellte häufig ein Problem dar.

Der vorliegenden Erfindung lag daher die Aufgabe zugrunde, wäßrige Dispersionen zur Verfügung zu stellen, welche dispergierte Polyethylenwachse und aminofunktionelle Organopolysiloxane enthalten, die auch bei Abwesenheit von Amidogruppen nicht zur Verpastung neigen und die sich ausgezeichnet für die Behandlung von Fasermaterialien, insbesondere von textilen Flächengebilden, eignen, welche diesen Fasermaterialien sehr angenehmen weichen Griff bei geringer Vergilbungstendenz vermitteln und eine Verbesserung bekannter Siloxandispersionen darstellen.

Die Aufgabe wurde gelöst durch eine wäßrige Dispersion, welche mindestens folgende Komponenten enthält
a) ein Organopolysiloxan mit durchschnittlich mindestens einem mittels eines Kohlenstoffatoms an ein Siliciumatom gebundenen Rest R, der einen Piperazinring oder den Rest -NHZ enthält, worin Z für den Cyclohexylrest steht,
b) ein dispergiertes Polyethylenwachs.

Überraschenderweise hat sich gezeigt, daß stabile wäßrige Dispersionen von Organopolysiloxanen und dispergierten Polyethylenwachsen erhalten werden, die nicht zur Verpastung neigen, wenn als Komponente a) ein Organopolysiloxan verwendet wird, in dem ein Rest R, der einen Piperazinring oder der einen Rest -NHZ enthält, an ein Siliciumatom gebunden ist. Die Piperazinringe bzw. die N-Cyclohexyl-Reste enthaltenden Reste R im Polysiloxan bewirken, daß die mit diesen Produkten behandelten Textilien nicht nur einen sehr angenehmen weichen Griff besitzen, wie er auch durch Siloxane mit offenkettigen Resten bewirkt wird, die Aminogruppen enthalten. Vielmehr führen diese Piperazingruppen oder N-Cyclohexylgruppen enthaltenden Polysiloxane auch zu einer sehr geringen Vergilbungsneigung. Außerdem sind die erfindungsgemäßen Dispersionen mit einer Reihe weiterer Produkte kombinierbar, ohne daß die Lagerstabilität beeinträchtigt wird. Mit anderen Worten, die Tendenz zur Verpastung wird auch bei Zusatz weiterer Produkte in vielen Fällen nicht vermehrt. So können z.B., wenn dies im Einzelfall gewünscht wird, noch Amidogruppen enthaltende Polysiloxane hinzugefügt werden, z.B. solche, wie sie in der EP-A 0 342 830 und EP-A 342 834 genannt sind. Ein entscheidender Vorteil der erfindungsgemäßen Dispersionen ist jedoch, daß auch bei Abwesenheit von Amidogruppen Lagerstabilität der Dispersion und niedrige Vergilbungstendenz gewährleistet sind.

Die erfindungsgemäßen wäßrigen Dispersionen enthalten als Komponente a) ein Organopolysiloxan, in dem durchschnittlich mindestens ein Rest R an ein Siliciumatom gebunden ist. Die Aussage "durchschnittlich" bedeutet, daß auch einzelne Organopolysiloxanmoleküle vorliegen können, in denen kein Rest R enthalten ist, daß jedoch die Anzahl der insgesamt vorliegenden Reste R mindestens so groß sein muß wie die Anzahl der Organopolysiloxanmoleküle. Die erfindungsgemäßen Dispersionen können auch mehrere verschiedene Organopolysiloxane enthalten.

Unter Organopolysiloxanen werden Verbindungen verstanden, welche Gruppen der Art 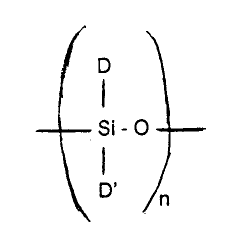
enthalten, in denen alle Substituenten D und D' einwertige organische Reste sind und n eine Zahl von mindestens 10 ist. Alle Reste D und D' sind bevorzugt jeweils mittels eines Kohlenstoffatoms an das betreffende Siliciumatom gebunden. Durchschnittlich mindestens einer der Reste D oder D' pro Molekül muß ein Rest R der in Anspruch 1 genannten und unten näher erläuterten Art sein, d.h. muß einen Piperazinring oder den Rest -NHZ enthalten. Es können jedoch auch mehrere der Reste D und D' für einen solchen Rest R stehen, jedoch ist vorzugsweise an ein und dasselbe Si-Atom höchstens ein Rest R gebunden. In einer bevorzugten Ausführungsform der erfindungsgemäßen Dispersionen sind die Organopolysiloxane von Polydimethylsiloxanen abgeleitet, d.h. alle Reste D und D', welche nicht für einen Rest R stehen, sind vorzugsweise Methylgruppen. Ein Teil oder alle dieser nicht für R stehenden Reste D und D' können jedoch auch für längere Alkylreste, z.B. mit 2 bis 4 C-Atomen oder für Phenylreste stehen. An den Enden der Polysiloxankette befinden sich bevorzugt Trimethylsilylgruppen oder direkt an Si gebundene Hydroxygrupen, es können sich jedoch an einem oder an beiden Kettenenden auch stickstoffhaltige, z.B. Amino-, Amido- oder Piperazineinheiten enthaltende Reste, oder längere Alkylreste oder Phenylgruppen befinden. Vorzugsweise ist die Polysiloxankette unverzweigt, und die Anzahl n der 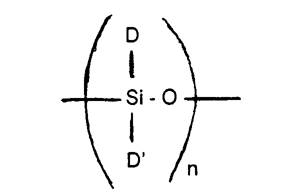
Einheiten liegt bevorzugt im Bereich von 50 bis 1000.

In den erfindungsgemäßen Dispersionen enthält das Organopolysiloxan (Komponente a)) durchschnittlich mindestens einen Rest R pro Siloxanmolekül. Dieser Rest R ist ein einwertiger organischer Rest, der mittels eines Kohlenstoffatoms an ein Siliciumatom gebunden ist, d.h. an demjenigen Ende des Restes R, das an die Siloxankette gebunden ist, befindet sich ein C-Atom. Der Rest R stellt vorzugsweise eine Seitenkette eines unverzweigten Organopolysiloxans dar, d.h. eines Organopolysiloxans, bei dem an kein Si-Atom mehr als zwei Sauerstoffatome gebunden sind. Das Organopolysiloxan kann durchschnittlich auch mehr als einen Rest R pro Polysiloxanmolekül enthalten, bevorzugt jedoch befinden sich nicht zwei Reste R am gleichen Si-Atom. Das Organopolysiloxan kann neben piperazinofunktionellen Resten R oder Resten R, welche die Gruppierung -NHZ aufweisen, auch noch andere stickstoffhaltige Substituenten aufweisen, z.B. Amidogruppen enthaltende Reste, wie sie in EP-A 0 342 830 und EP-A 0 342 834 beschrieben sind.

Auch wenn andere als nur piperazinofunktionelle Substituenten oder Substituenten mit endständigen -NHZ-Gruppierungen anwesend sind, befindet sich vorzugsweise maximal ein stickstoffhaltiger Substituent an ein- und demselben Si-Atom.

Als Komponente a) kann auch ein Gemisch von Organopolysiloxanen verwendet werden, von denen das eine piperazinofunktionelle Reste R und das andere nicht-cyclische Reste mit Aminogruppen enthält. In dieser Mischung sollten mindestens 50, vorzugsweise mehr als 80 % aller N-haltigen Reste piperazinofunktionelle Reste R sein oder Reste R, welche die Gruppe -NHZ enthalten.

### Der Rest R:

in einer Ausführungsform der erfindungsgemäßen Dispersionen enthält der Rest R mindestens einen Piperazinring, kann jedoch zusätzlich noch weitere funktionelle Gruppen wie Amidogruppen enthalten. In einer zweiten Ausführungsform enthält der Rest R am Ende die Gruppe -NHZ, wobei Z den Cyclohexylrest darstellt. Das Kohlenstoffatom, mit dem der Rest R im ersteren Fall an die Polysiloxankette gebunden ist, ist vorzugsweise mit einem Stickstoffatom des Piperazinrings verbunden, entweder direkt oder über eine Alkylenbrücke, die ihrerseits durch ein -O-, -S-, oder -NH- Brückenglied unterbrochen sein kann. Bevorzugt enthält der Rest R also Piperazinyl-(1)-Reste, obwohl auch Produkte mit Piperazinyl-(2)-Resten verwendet werden können, d.h. solche, in denen das an Si gebundene Kohlenstoffatom des Rests R direkt oder über eine Brücke an ein Kohlenstoffatom des Piperazinrings gebunden ist. Bevorzugt werden für erfindungsgemäße Dispersionen als Komponente a) Organopolysiloxane verwendet, welche einen Rest R mit folgender Struktur (I) enthalten: 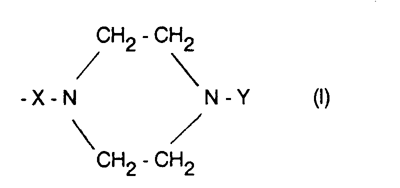
worin X für einen Alkylenrest mit 1 bis 6 Kohlenstoffatomen steht, der durch eine -0-, -S- oder - NH- Brücke unterbrochen sein kann und Y für einen Alkylrest mit 1 bis 4 Kohlenstoffatomen, vorzugsweise für CH3, steht. Falls gewünscht, kann auch ein Siloxan verwendet werden, in dem Y für Wasserstoff steht; dies stellt jedoch keine bevorzugte Ausführungsform dar.

Textilien, die mit solchen Dispersionen von Organopolysiloxanen behandelt wurden, besitzen einen sehr angenehmen Griff. Außerdem liegt ein großer Vorteil dieser piperazinofunktionellen Polysiloxane in ihrer äußerst geringen Vergilbungstendenz, verglichen mit anderen aminofunktionellen Siloxanen.

Organopolysiloxane, welche Reste mit Piperazinringen enthalten, sind bekannte Produkte. Geeignete Vertreter und ihre Herstellung werden in der EP-A2 0 441 530 beschrieben; siehe außerdem Chemical Abstracts 109(2):7746a (Referat über JP-A 63-67759), Chemical Abstracts 108(6):39302y (Referat über JP-A 62-210654), US 4 511 701, Chemical Abstracts 99(6):39577n.

Falls der Rest R keinen Piperazinrest enthält, muß er an einem Ende die Gruppierung -NHZ aufweisen. Diese Gruppierung -NHZ ist mit einem Si-Atom der Polysiloxankette verbunden, vorzugsweise über eine Alkylenbrücke X der gleichen Art, wie oben für den Fall Piperazinringe enthaltender Reste R beschrieben wurde. In der Gruppierung -NHZ steht Z für den Cyclohexylrest. Polysiloxane, in welchen der Rest R die Gruppierung -NHZ enthält und welche als Komponente a) der erfindungsgemäßen Dispersionen verwendet werden können, sind in der DE-A1 37 30 413 beschrieben. Besonders geeignet als Komponente a) erfindungsgemäßer Dispersionen sind Polydimethylsiloxane, in denen ein Teil der Methylgruppen durch Reste der Struktur -(CH₂)₃-NHZ ersetzt ist.

Außer den genannten Organopolysiloxanen (Komponente a)) enthalten die erfindungsgemäßen Dispersionen als Komponente b) ein dispergiertes Polyethylenwachs. Solche dispergierten Polyethylenwachse lassen sich erhalten, indem man ein Polyethylenwachs zuerst modifiziert und anschließend in Wasser mit Hilfe geeigneter Dispergatoren dispergiert. Die Polyethylenwachse sind normalerweise modifiziert, damit sie wasserdispergierbar werden. Die vor der Dispergierung durchgeführte Modifizierung kann beispielsweise darin bestehen, daß durch Oxidation von Polyethylen saure (-COOH) Gruppen gebildet werden.

Geeignete dispergierte bzw. dispergierbare Polyethylenwachse sind im Handel erhältlich und in US 4 211 815, DE-A 28 24 716, DE-A 19 25 993 sowie in der EP-A2 0 412 324 beschrieben. In diesen Schriften finden sich auch Angaben über die Herstellung modifizierter (= dispergierbarer) Polyethylenwachse sowie über deren Dispergierung in Wasser.

Besonders gut geeignet für erfindungsgemäße Dispersionen sind dispergierte Polyethylenwachse mit einer Dichte von mindestens 0,91 g/cm³ bei 20°C, insbesondere einer Dichte von 0,95 bis 1,05 g/cm³, einer Säurezahl von mindestens 5, insbesondere von 10 bis 60, und einer Verseifungszahl von mindestens 10, insbesondere einer Verseifungszahl von 15 bis 80. Solche dispergierbaren Polyethylenwachse und Methoden für die Herstellung von wäßrigen Dispersionen dieser Polyethylenwachse sind in der EP-A2 0 412 324 beschrieben. Als geeignete Dispergatoren sind dort bekannte ethoxilierte Produkte genannt, insbesondere ethoxilierte Alkohole und Alkylphenole. Diese Dispergatoren sind auch für die Herstellung erfindungsgemäßer Dispersionen verwendbar. Daneben sind für die Herstellung erfindungsgemäßer Dispersionen Produkte als Dispergatoren geeignet, welche in der WO 88/08436 zur Dispergierung aminofunktioneller Polysiloxane genannt sind.

Eine weitere Klasse von Dispergatoren, welche in einer Reihe von Fällen geeignet sind, stellen die Alkylpolyglykoside dar. Diese besitzen den Vorteil guter Abbaubarkeit und Umweltfreundlichkeit. Alkylpolyglykoside sind bekannte, auf dem Markt erhältliche Produkte, deren Eignung als Dispergatoren bereits bekannt ist. Alkylpolyglykoside und deren Herstellung sind z.B. in der DE 28 41 623, der DE-A1 39 25 846, der EP-A1 0 362 671 beschrieben. Geeignet sind z.B. Produkte der Formel 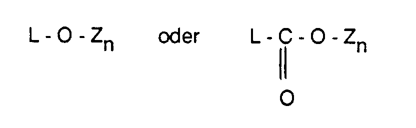
worin L ein linearer oder verzweigter, gesättigter oder ungesättigter Alkylrest mit 8 bis 16 C-Atomen, Z ein Oligoglykosidrest ist und n im Mittel für eine Zah von 1 bis 5 steht. Der Ausdruck "im Mittel" bedeutet natürlich, daß das Alkylpolyglykosid ein Gemisch aus Produkten sein kann, deren einzelne Moleküle sich im Wert von n unterscheiden. Diese Alkylpolyglykoside und ihre Verwendung als Dispergatoren sind in der DE-A1 39 25 846 beschrieben.

In einer bevorzugten Ausführungsform der erfindungsgemäßen Dispersionen werden als Komponente a) Organopolysiloxane verwendet, in denen bestimmte Bereiche für die Anzahl der anwesenden Piperazinringe bzw. Cyclohexylreste enthaltenden Reste R im Verhältnis zur Anzahl der anwesenden Siliciumatome eingehalten sind. Falls die Anzahl der Reste R geringer ist als es diesem bevorzugten Bereich entspricht, so ist der Effekt, den der Rest R ausübt, noch nicht in allen Fällen optimal; falls sie höher ist, können sich die Kosten der Produkte ohne nennenswerte Effektsteigerung erhöhen. Der günstige Bereich für den durchschnittlichen Gehalt an Resten R ist dann erreicht, wenn in Komponente a) das zahlenmäßige Verhältnis derjenigen Si-Atome, an welche kein Rest R gebunden ist, zu denjenigen Si-Atomen, an die ein Rest R gebunden ist, 5 : 1 bis 1000 : 1 beträgt. Besonders günstig ist es, wenn dieses Verhältnis bei 100 : 1 bis 300 : 1 liegt. Der bei einem bestimmten Polysiloxan tatsächlich vorliegende Wert für dieses Verhältnis läßt sich ermitteln über ²⁹Si-NMR-Spektroskopie - ggf. in Verbindung mit einer Stickstoff - bzw. Aminogruppenbestimmung. Der Wert für dieses Verhältnis läßt sich bei der Synthese entsprechender Siloxane steuern.

Bevorzugt enthält eine erfindungsgemäße Dispersion die Komponenten a), b) und Wasser in folgenden relativen Gewichtsverhältnissen zueinander:

| | |
|---|---|
| Komponente a): | 5 bis 30 Gew.teile |
| Komponente b): | 5 bis 30 Gew.teile |
| Wasser: | 40 bis 90 Gew.teile. |

Diese Werte beziehen sich für die Komponenten a) und b) (Organopolysiloxan und dispergiertes Polyethylenwachs) auf wasserfreie Produkte. Für Komponente b) beziehen sich diese Zahlen nur auf modifiziertes Polyethylenwachs ohne Dispergator. Der Dispergatorgehalt erfindungsgemäßer Dispersionen kann im üblichen Rahmen liegen, z.B. bei 5 bis 20 Gew.%, bezogen auf Gesamtdispersion.

Die erfindungsgemäßen Dispersionen können nach üblichen, dem Fachmann geläufigen Methoden hergestellt werden, z.B. indem man Wasser und einen Dispergator oder ein Dispergatorgemisch vorlegt und das Organopolysiloxan einrührt, ggf. bei erhöhter Temperatur und unter Zuhilfenahme geeigneter bekannter Homogenisierungsvorrichtungen, und die erhaltene Dispersion mit einer getrennt hergestellten Dispersion, welche die Komponente b) enthält, vereinigt. Eine andere Methode besteht darin, das Organopolysiloxan, ggf. in Mischung mit Dispergator und/oder einer geringen Menge an Säure, direkt in eine fertige Polyethylenwachsdispersion einzurühren.

Die erfindungsgemäßen Dispersionen eignen sich gut für die Behandlung von Fasermaterialien, insbesondere von Flächengebilden aus Fasermaterialien. Vor allem die Behandlung von Textilmaterialien mit erfindungsgemäßen Dispersionen führt zu Artikeln mit angenehm weichem Griff bei nur gering oder überhaupt nicht ausgeprägter Vergilbungstendenz. Die Behandlung der Fasermaterialien mit erfindungsgemäßen Dispersionen kann nach bekannten Methoden geschehen, z.B. in einem Foulardprozeß. Gegebenenfalls werden die Dispersionen vor ihrer Anwendung noch mit Wasser auf eine niedrigere Konzentration verdünnt. Nach Behandlung werden die Faser- bzw. Textilmaterialien in bekannter Weise weiterverarbeitet, z.B. getrocknet und dann ggf. noch bei erhöhter Temperatur behandelt. Textilmaterialien, welche vorteilhaft mit erfindungsgemäßen Dispersionen behandelt werden können, sind z.B. Artikel, welche aus Cellulosefasern bestehen oder Cellulosefasern enthalten. Den erfindungsgemäßen Dispersionen können vor ihrer Anwendung noch weitere Mittel zugesetzt werden, welche üblicherweise für die Behandlung von Fasermaterialien verwendet werden. Auf diese Weise können, wenn dies gewünscht wird, weitere Effekte der Textilausrüstung erzielt werden. Bekannte Textilausrüstungsmittel, welche den erfindungsgemäßen Dispersionen zugesetzt werden können, sind beispielsweise Cellulosevernetzer.

Die Erfindung wird nunmehr durch Ausführungsbeispiele veranschaulicht.

### Beispiel 1: Herstellung einer erfindungsgemäßen Dispersion:

15 Gew.teile eines Polysiloxans, das im wesentlichen die Struktur besaß, die auf Seite 6, Zeile 55 der EP-A2 0 441 530 angegeben ist, 10 Gew.teile Dispergator (ethoxilierter Isotridecylalkohol mit durchschnittlich 6 Oxyethyleneinheiten), 1,2 Gew.teile 60%ige Essigsäure und 73,8 g Wasser wurden vermischt, unter Rühren auf 70°C erwärmt, 5 Minuten bei dieser Temperatur gehalten und dann gekühlt. Es resultierte eine stabile Mikroemulsion. Diese wurde im Verhältnis 1 : 1 (Gew.verhältnis) mit einer Dispersion eines oxidierten Polyethylenwachses gemischt. Die Polyethylenwachsdispersion enthielt ca. 28 Gew.% Polyethylenwachs, 7,8 Gew.% zweier Dispergatoren auf Basis ethoxilierter Isotridecylalkohole mit unterschiedlichem Ethoxilierungsgrad (8 bzw. 20 EO), 0,5 Gew.% KOH und ca. 64 Gew.% Wasser. Die verwendete Polyethylenwachsdispersion war die gleiche, die in Beispiel 1 auf Seite 5 der EP-A2 0 412 324 beschrieben ist. Es wurde eine stabile Dispersion erhalten, die auch nach 1 Monat noch dünnflüssig und zur Behandlung von Textilien sehr gut geeignet war.

### Beispiel 2: (nicht erfindungsgemäßes Vergleichsbeispiel)

Beispiel 1 wurde unter Verwendung der gleichen Polyethylenwachsdispersion wiederholt. An Stelle der Dispersion des piperazinofunktionellen Polysiloxans wurde jedoch eine Dispersion eingesetzt, die ein anderes Polysiloxan und daneben einen ethoxilierten Isotridecylalkohol (durchschnittlich 7 EO-Einheiten), Essigsäure und Wasser enthielt. Das hierfür verwendete Polysiloxan war ebenfalls auf Basis Polydimethylsiloxan aufgebaut, wobei ein Teil der Methylgrupen durch offenkettige Reste mit primären und sekundären Aminogruppen ersetzt war. Piperazinringe oder Cyclohexylreste waren jedoch nicht anwesend. Diese Polysiloxandispersion war zwar für sich, d.h. vor Vermischen mit der Polyethylenwachsdispersion, ebenfalls stabil. Nach dem Vermischen mit der Polyethylenwachsdispersion im Gewichtsverhältnis 1 : 1 bildete sich jedoch eine deutlich pastöse Mischung, die nach 1-monatiger Lagerung fest geworden war.

## Patentansprüche

1. Wäßrige Dispersion, welche mindestens folgende Komponenten enthält,
a) ein Organopolysiloxan mit durchschnittlich mindestens einem mittels eines Kohlenstoffatoms an ein Siliciumatom gebundenen Rest R, der einen Piperazinring oder den Rest -NHZ enthält, worin Z für den Cyclohexylrest steht,
b) ein dispergiertes Polyethylenwachs.

2. Dispersion nach Anspruch 1, dadurch gekennzeichnet, daß der Rest R folgende Struktur (I) besitzt 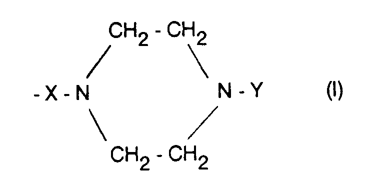 worin X für einen Alkylenrest mit 1 bis 6 Kohlenstoffatomen steht, der durch eine -0-, -S- oder -NH- Brücke unterbrochen sein kann und Y für einen Alkylrest mit 1 bis 4 Kohlenstoffatomen, vorzugsweise für CH3, steht.

3. Dispersion nach Patentanspruch 1 oder 2, dadurch gekennzeichnet, daß Komponente b) ein dispergiertes, durch saure Gruppen modifiziertes Polyethylenwachs mit einer Dichte von mindestens 0,91 g/cm³ bei 20°C, einer Säurezahl von mindestens 5 und einer Verseifungszahl von mindestens 10 ist.

4. Dispersion nach einem oder mehreren der Patentansprüche 1 bis 3, dadurch gekennzeichnet, daß Komponente a) ein Polydimethylsiloxan ist, in dem eine oder mehrere Methylgruppen, jedoch nicht mehr als eine Methylgruppe pro Si-Atom, durch einen Rest R ersetzt sind.

5. Dispersion nach einem oder mehreren der Patentansprüche 1 bis 4, dadurch gekennzeichnet, daß in Komponente a) das zahlenmäßige Verhältnis derjenigen Si-Atome, an welche kein Rest R gebunden ist, zu denjenigen Si-Atomen, an die ein Rest R gebunden ist, 5 : 1 bis 1000 : 1 beträgt.

6. Dispersion nach einem oder mehreren der Patentansprüche 1 bis 5, dadurch gekennzeichnet, daß sie die Komponenten a), b) und Wasser in folgenden relativen Gewichtsverhältnissen zueinander enthält
| | |
|---|---|
| Komponente a): | 5 bis 30 Gew.teile |
| Komponente b): | 5 bis 30 Gew.teile |
| Wasser: | 40 bis 90 Gew.teile |

7. Verwendung einer Dispersion, ggf. nach Verdünnung mit Wasser, gemäß einem oder mehreren der Patentansprüche 1 bis 6 zur Behandlung von Fasermaterialien, insbesondere Textilmaterialien.

8. Verwendung nach Patentanspruch 7, dadurch gekennzeichnet, daß der Dispersion weitere für die Behandlung von Fasermaterialien übliche Mittel zugesetzt sind.
